# EUROPEAN PATENT SPECIFICATION

(11) **EP 3 405 033 B1**
(45) Date of publication and mention of the grant of the patent: **02.07.2025**
(21) Application number: 17741779.7
(22) Date of filing: 12.01.2017
(51) Int. Cl.: A01N 43/42, A01N 33/08, A01N 25/32, A01P 13/00

(54) **CLOQUINTOCET SALTS FOR SAFENING PYROXSULAM COMPOSITIONS**
CLOQUINTOCET-SALZE ZUM UNSCHÄDLICHMACHEN VON PYROXSULAMZUSAMMENSETZUNGEN
SELS DE CLOQUINTOCET POUR CONFÉRER UN EFFET PHYTOPROTECTEUR À DES COMPOSITIONS DE PYROXSULAM

(30) Priority: 19.01.2016 US 201662280281 P
(43) Date of publication of application: 28.11.2018
(73) Proprietor: Corteva Agriscience LLC, Indianapolis, IN 46268 (US)
(72) Inventor: OUSE, David G., Indianapolis Indiana 46268 (US); LI, Mei, Indianapolis Indiana 46268 (US); GIFFORD, James, Indianapolis Indiana 46268 (US); KEENEY, Franklin Nelson, Indianapolis Indiana 46268 (US); ZHANG, Hong, Indianapolis Indiana 46268 (US)
(74) Representative: f & e patent
(86) International application number: PCT/US2017/013123
(87) International publication number: WO 2017/127281

(56) References cited:
- WO-A1-2017/035292
- US-A1- 2012 238 449
- US-A1- 2013 217 578
- US-A1- 2013 217 578
- US-A1- 2014 100 109
- US-A1- 2014 100 109
- US-A1- 2014 179 526
- SETTIVARI RAJA S ET AL: "Tiered application of the neutral red release and EpiOcular(TM) assays for evaluating the eye irritation potential of agrochemical formulations", REGULATORY TOXICOLOGY AND PHARMACOLOGY, vol. 81, 2016, pages 407 - 420, XP029816907, ISSN: 0273-2300, DOI: 10.1016/J.YRTPH.2016.09.028
- "Material Safety Data Sheet, Product Name: Simplicity* Issue Date: 2012.02.27", 27 February 2012, DOW AGROSCIENCES, article TRADEMARK OF DOW ET AL: "Material Safety Data Sheet, Product Name: Simplicity* Issue Date: 2012.02.27", pages: 1 - 10, XP093253614

## Description

### CROSS-REFERENCE TO RELATED APPLICATIONS

This application claims the benefit of U.S. Provisional Application No. 62/280,281, filed January 19, 2016.

### BACKGROUND

Controlling the growth of undesirable vegetation that can negatively affect the growth of desirable vegetation such as crops is a recurring issue in agriculture. A variety of herbicides and herbicidal formulations effective in controlling such unwanted growth have been developed.

In some cases, although a herbicide may be effective in controlling undesirable vegetation, it may also have a phytotoxic effect on a crop and cause injury or even kill the crop. Cloquintocet (CQC) is a quinoline compound that functions as a herbicidal safener by reducing the phytotoxic effects of the herbicide on crops to which it is applied. Cloquintocet has traditionally been provided as the 1-methylhexyl ester, i.e., cloquintocet-mexyl (CQC-M), which is also known as the 2-heptyl ester. US 2014/0100109 A1 relates to safening compositions of 6-(trisubstituted phenyl)-4-amino-2-pyridine carboxylate herbicides and cloquintocet-mexyl for cereal crops. US2013/217578 A1 discloses compositions comprising pyroxsulam and the safener cloquintocet as an ester, namely cloquintocet mexyl ester.

Although CQC-M is an effective safener, it has certain properties that make it difficult to handle and use in some situations, such as (1) an incompatibility with water leading to crystal formation, clogging of spray nozzles and/or loss of its safening properties, (2) a potential for ester hydrolysis in aqueous formulations, and (3) a low melting point making processing and storage of granular formulations challenging. Therefore, there is a desire in the art to provide effective safeners for crops that have improved compatibility with water.

### SUMMARY

Herbicidal compositions containing a herbicidally effective amount of: (a) pyroxsulam or an agriculturally acceptable salt thereof, and (b) a cloquintocet salt as specified in appended claim 1 are described herein. In some cases, the weight ratio of (a) in grams active ingredient (g ai) to (b) in grams acid equivalent (g ae) in the described compositions is from about 1:4 to about 1:0.5. In some cases, (a) is applied in an amount of from 4-40 g ai/ha. In some embodiments, (b) is applied in an amount of from 10-80 g ae/ha.

The cloquintocet salt comprises a cation selected from the group consisting of monoethanolammonium, diethanolammonium, triethanolammonium, monoisopropanolammonium, diisopropanolammonium, triisopropanolammonium, choline, N N-dimethylethanolammonium dimethylammonium, isopropylammonium, or mixtures thereof.

In some cases, the composition is a liquid composition selected from an aqueous suspension concentrate (SC), or an aqueous suspension emulsion (i.e., a suspoemulsion or an SE) concentrate. In some cases, the composition is an aqueous spray solution or mixture. In some cases, the composition can further include an additional pesticide. In some embodiments, the additional pesticide can be a herbicide.

The compositions described herein that are SC or SE compositions contain, with respect to the total composition, from 5 grams active ingredient per liter (gai/L) to 150 gai/L of pyroxsulam, or an agriculturally acceptable salt thereof, and from 10 grams acid equivalent per liter (gae/L) to 250 gae/L of a salt of cloquintocet.

In some cases, the compositions described herein may offer improved safety to those handling such compositions should the compositions accidentally be splashed onto or otherwise injected into their eyes. In some cases, an aqueous solution containing one or more of certain cloquintocet salts exhibit a lower potential for eye irritancy than an aqueous solution containing other forms of cloquintocet.

Also disclosed herein are methods of controlling undesirable vegetation which comprises contacting the vegetation or the locus thereof with or applying to the soil or water to prevent the emergence or growth of vegetation any of the compositions disclosed herein. In some cases, the composition is applied postemergence to the undesirable vegetation. In some cases, the undesirable vegetation is controlled in crops such as wheat, barley, triticale, teff, oats, sorghum, corn, rice, sugarcane, or pasture grasses without significant adverse effects to the crops. In some cases, the undesirable vegetation is selected from the group consisting of wild oat, annual ryegrass, and combinations thereof.

### DETAILED DESCRIPTION

The invention relates to 1) herbicidal compositions containing a herbicidally effective amount of (a) pyroxsulam or an agriculturally acceptable salt thereof and (b) a cloquintocet salt, wherein the cloquintocet salt contains a cation selected from the group consisting of monoethanolammonium, diethanolammonium, triethanolammonium, monoisopropanolammonium, diisopropanolammonium, triisopropanolammonium, choline, N,N-dimethylethanolammonium, dimethylammonium, isopropylammonium, or mixtures thereof,
wherein the herbicidal composition is
an aqueous suspension concentrate, or an aqueous suspension emulsion concentrate, containing with respect to the total composition, (a) from 5 grams active ingredient per liter (g ai/L) to 150 g ai/L of pyroxsulam, or an agriculturally acceptable salt thereof and (b) from 10 grams acid equivalent per liter (g ae/L) to 250 g ae/L of the cloquintocet salt; or
an aqueous spray mixture or solution comprising (a) 0.001 to 2.0 wt.-% pyroxsulam and (b) 0.005 to 2.0 wt.-% ae of the cloquintocet salt, and 2) a method of controlling undesirable vegetation which comprises comprising the vegetation or the locus thereof with or applying to the soil or water to prevent the emergence or growth of vegetation the mentioned herbicidal composition.

The scope of protection is established by the claims. Subject-matter disclosed herein explicitly or implicitly which differs from the subject-matter of the claims does not fall within the scope of protection.

### I. Definitions

The term "herbicide," as used herein, means an active ingredient that kills, controls, or otherwise adversely modifies the growth of vegetation. A "herbicidally effective amount" is an amount of an active ingredient that causes a "herbicidal effect," *i.e.,* an adversely modifying effect and includes deviations from, for instance, natural development, killing, regulation, desiccation, and retardation. The terms "crops" and "vegetation" can include, for instance, germinant seeds, emerging seedlings, and established vegetation.

The term "pesticide," as used herein, means a herbicide, an insecticide, or a fungicide.

### II. Pyroxsulam

Compositions and methods described herein can include pyroxsulam (*i.e.,* N-(5,7-dimethoxy[1,2,4]triazolo[1,5-a]pyrimidin-2-yl)-2-methoxy-4-(trifluoromethyl)pyridine-3-sulfonamide) or an agriculturally acceptable salt thereof. Pyroxsulam is a triazolopyrimidine sulfonamide herbicide that provides broad-spectrum control of many annual, biannual, and perennial weeds, and has the following structure.

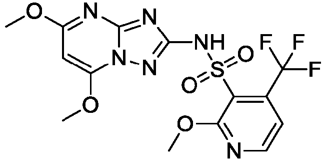

As a member of the triazolopyrimidine sulfonamide class of chemistry, pyroxsulam inhibits the plant enzyme acetolactate synthase (ALS), which is essential for the synthesis of branched-chain amino acids valine, leucine, and isoleucine. Inhibition of amino acid production subsequently inhibits cell division and causes death in susceptible plants.

Pyroxsulam is a systemic, phloem and xylem mobile herbicide that is absorbed via leaves, shoots and roots. The leaves and roots are the primary uptake sites in plants. The compound is translocated to meristematic tissue. Visible symptoms include stunting and chlorosis, followed by necrosis and then death.

Pyroxsulam is or has been commercially available, for example, from Dow AgroSciences, LLC under the trademarks ADMITT^{®}, CRUSADER^{®}, QUASAR^{®}, MERIT^{®}, POWERFLEX^{®}, SIMPLICITY^{®}, ACROSS^{®}, and BROADWAY^{®}. Its herbicidal activity is described in The Pesticide Manual, Fifteenth Edition, 2009.

The compositions described herein that are liquid compositions (i.e., SC and SE) can comprise, with respect to the total composition, from about 5 grams active ingredient per liter (gai/L) to about 100 gai/L of pyroxsulam, from about 5 gai/L to about 90 gai/L of pyroxsulam, from about 5 gai/L to about 80 gai/L of pyroxsulam, from about 5 gai/L to about 70 gai/L of pyroxsulam, from about 5 gai/L to about 60 gai/L of pyroxsulam, from about 5 gai/L to about 50 gai/L of pyroxsulam, from about 5 gai/L to about 40 gai/L of pyroxsulam, from about 5 gai/L to about 30 gai/L of pyroxsulam, from about 5 gai/L to about 20 gai/L of pyroxsulam, or from about 5 gai/L to about 15 gai/L of pyroxsulam, or an agriculturally acceptable salt thereof. In some embodiments the liquid, aqueous compositions described herein may comprise from about 10 gai/L to about 100 gai/L of pyroxsulam, from about 20 gai/L to about 100 gai/L of pyroxsulam, from about 30 gai/L to about 100 gai/L of pyroxsulam, from about 40 gai/L to about 100 gai/L of pyroxsulam, from about 50 gai/L to about 100 gai/L of pyroxsulam, from about 60 gai/L to about 100 gai/L of pyroxsulam, from about 70 gai/L to about 100 gai/L of pyroxsulam, from about 80 gai/L to about 100 gai/L of pyroxsulam, or from about 90 gai/L to about 100 gai/L of pyroxsulam, or an agriculturally acceptable salt thereof. In some embodiments the liquid, aqueous compositions described herein may comprise from about 10 gai/L to about 50 gai/L of pyroxsulam, from about 20 gai/L to about 40 gai/L of pyroxsulam, from about 25 gai/L to about 35 gai/L of pyroxsulam, from about 50 gai/L to about 90 gai/L of pyroxsulam, from about 60 gai/L to about 80 gai/L of pyroxsulam, or from about 70 gai/L to about 80 gai/L of pyroxsulam, or an agriculturally acceptable salt thereof.

The liquid, aqueous compositions described herein that are aqueous spray mixtures or solutions comprise from 0.001 to 2.0 wt% of pyroxsulam, from 0.01 to 1.0 wt% of pyroxsulam, from 0.01 to about 0.5 wt% of pyroxsulam, or from 0.01 to 0.1 wt% of pyroxsulam.

Pyroxsulam is particularly problematic with respect to injury to commercially valuable grass crops, such as wheat (e.g., Spring wheat, Durum wheat), oats (e.g., Wild Oats), barley and sorghum and broadleaf crops, such as field pea, clovers, turnip, and other brassica species. As the data shows, the use of CQC salts shows significantly less injury compared to the mexyl ester of CQC (CQC-M). This is unexpected since it has generally been shown that CQC-M is taken up better by the crops than the free acid due to its increased lipophilicity.

### III. Cloquintocet salts

Cloquintocet (CQC) is a quinoline compound that has the following chemical structure.

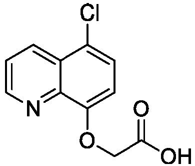

Cloquintocet is a safener that is normally used as the mexyl ester, is applied in combination with herbicides, and is useful for reducing phytotoxicity to crops such as wheat, barley, triticale, rye, teff, oats, corn, sorghum, rice, sugar cane, and pasture grasses. Herbicide safeners are molecules used in combination with herbicides to make them "safer" - that is, to reduce the effect of the herbicide on crop plants, and to improve selectivity between crop plants vs. weed species being targeted by the herbicide. Herbicide safeners can be used to pre-treat crop seeds prior to planting, or they can be sprayed on plants as a mixture with the herbicide.

The cloquintocet is provided herein as a cloquintocet salt comprising a cation selected from the group consisting of monoethanolammonium, monoisopropanolammonium, isopropylammonium, diethanolammonium, diisopropanolammonium, dimethylammonium, triethanolammonium, triisopropanolammonium, N,N-dimethylethanolammonium, choline, or mixtures thereof. In some cases, the cloquintocet salt includes cloquintocet choline salt (CQC-choline).

The compositions described herein that are liquid, compositions (i.e., SC and SE compositions) may contain, with respect to the total composition, from about 10 grams acid equivalent per liter (gae/L) to about 250 gae/L of a salt of cloquintocet, from about 20 gae/L to about 225 gae/L of a salt of cloquintocet, from about 20 gae/L to about 200 gae/L of a salt of cloquintocet, from about 30 gae/L to about 200 gae/L of a salt of cloquintocet, from about 40 gae/L to about 200 gae/L of a salt of cloquintocet, from about 50 gae/L to about 200 gae/L of a salt of cloquintocet, from about 60 gae/L to about 200 gae/L of a salt of cloquintocet, from about 70 gae/L to about 200 gae/L of a salt of cloquintocet, from about 80 gae/L to about 200 gae/L of a salt of cloquintocet, from about 90 gae/L to about 200 gae/L of a salt of cloquintocet, from about 100 gae/L to about 200 gae/L of a salt of cloquintocet, from about 120 gae/L to about 200 gae/L of a salt of cloquintocet, from about 140 gae/L to about 200 gae/L of a salt of cloquintocet, from about 160 gae/L to about 200 gae/L of a salt of cloquintocet, or from about 180 gae/L to about 200 gae/L of a salt of cloquintocet. In some embodiments the liquid, aqueous compositions described herein may comprise from about 10 gae/L to about 180 gae/L of a salt of cloquintocet, from about 10 gae/L to about 160 gae/L of a salt of cloquintocet, from about 10 gae/L to about 160 gae/L of a salt of cloquintocet, from about 10 gae/L to about 140 gae/L of a salt of cloquintocet, from about 10 gae/L to about 120 gae/L of a salt of cloquintocet, from about 10 gae/L to about 100 gae/L of a salt of cloquintocet, from about 10 gae/L to about 90 gae/L of a salt of cloquintocet, from about 10 gae/L to about 80 gae/L of a salt of cloquintocet, from about 10 gae/L to about 70 gae/L of a salt of cloquintocet, from about 10 gae/L to about 60 gae/L of a salt of cloquintocet, from about 10 gae/L to about 50 gae/L of a salt of cloquintocet, from about 10 gae/L to about 40 gae/L of a salt of cloquintocet, from about 10 gae/L to about 30 gae/L of a salt of cloquintocet, or from about 20 gae/L to about 30 gae/L of a salt of cloquintocet. In some embodiments the liquid, aqueous compositions described herein may comprise from about 20 gae/L to about 100 gae/L of a salt of cloquintocet, from about 30 gae/L to about 90 gae/L of a salt of cloquintocet, from about 40 gae/L to about 80 gae/L of a salt of cloquintocet, from about 50 gae/L to about 70 gae/L of a salt of cloquintocet, from about 60 gae/L to about 70 gae/L of a salt of cloquintocet, from about 60 gae/L to about 150 gae/L of a salt of cloquintocet, from about 70 gae/L to about 140 gae/L of a salt of cloquintocet, from about 80 gae/L to about 130 gae/L of a salt of cloquintocet, from about 90 gae/L to about 120 gae/L of a salt of cloquintocet, or from about 100 gae/L to about 110 gae/L of a salt of cloquintocet.

The compositions described herein that are aqueous spray solutions or mixtures may contain, with respect to the total composition, from about 0.005 to about 2.0 wt% ae of a salt of cloquintocet, from about 0.05 to about 1.0 wt% of a salt of cloquintocet, from about 0.05 to about 0.5 wt% of a salt of cloquintocet, or from about 0.05 to about 0.2 wt% of a salt of cloquintocet.

An aqueous solution containing one or more of certain cloquintocet salts exhibit a lower potential for eye irritancy than an aqueous solution containing the free acid form of cloquintocet or the ammonium salt form of cloquintocet. In some cases, the cloquintocet salt exhibits a neutral red release assay NRR50 value of at least 15 mg ae/mL. For example, the cloquintocet salt can exhibit an NRR50 value of at least 20, at least 35, at least 50, at least 70, at least 90, at least 120, at least 150, at least 180, or at least 210 mg ae/mL.

### IV. Herbicidal mixtures or combinations

The (a) pyroxsulam or an agriculturally acceptable salt thereof, is mixed with or applied in combination with (b) a cloquintocet salt as described herein. In some cases, the weight ratio of (a) to (b) is from 1:4 to 1:0.5. In some cases, the weight ratio of (a) to (b), can be at least 1:4, for example at least 1:3.75, 1: 3.5, 1:3.25, 1:3, 1:2.75, 1:2.5, 1:2.25, 1:2, 1:1.75, 1:1.5, 1:1.25, 1:1, or 1:0.75. In some cases, the weight ratio of (a) to (b) can be 1:0.5 or less, for example 1:0.7 or less, 1:0.9 or less, 1:1 or less, 1:1.25 or less, 1:1.5 or less, 1:1.75 or less, 1:2 or less, 1:2.25 or less, 1:2.5 or less, 1:2.75 or less, 1:3 or less, 1:3.25 or less, 1:3.5 or less, 1:3.75 or less. In some embodiments, the weight ratio of (a) to (b) can be from 1:4 to 1:0.5, from 1:3.75 to 1:0.75, from 1:3.5 to 1:1, from 1:3.4 to 1:1.25, from 1:3.3 to 1:1.5, from 1:3.2 to 1:1.75, or from 1:3 to 1:2.

### V. Eye irritancy

Water soluble salts of certain carboxylic acids present in some aqueous agrochemical formulations can be irritating if accidentally splashed or otherwise injected into the eye of anyone handling such a formulation. This property may lead to restrictive labeling of the products that limits their usefulness in certain markets, even where the active ingredient itself provides no such hazard.

The neutral red release (NRR) assay is an *in vitro* cytotoxicity test that can be used to measure the immediate toxic effects of test substances on cell membranes, resulting in the leaking of intracellular contents. The assay has already been used for several years to evaluate the cytotoxicities of various kinds of products, such as cosmetics, pharmaceuticals, industrial chemicals and household products. It has undergone in-house validation by many companies, and has been found to be particularly useful for identifying substances that are potentially capable of causing adverse reactions on coming into brief contact with the eye or the skin at relatively high concentrations, such as might occur in an adventitious splash into the eye or onto the skin, followed by a quick rinse. See the following literature for further information on this test: Reader, S. J., Blackwell, V., O'Hara, R, Clothier, R H., Griffin, G., and Balls, M., "A vital dye release method for assessing the short-term cytotoxic effects of chemicals and formulations," ATLA, 17, 28-37 (1989); Balls, M., Reader, S., Atkinson, K., Tarrant, J., and Clothier, R. H., "Non-animal alternative toxicity tests for detergents: Genuine replacements or mere prescreens?" Chern. Tech. Biotechnol. 50, 423-433 (1992); and Clothier, R. H., "The FRAME neutral red release assay," INVITTOX Protocol number 54 (1992).

In some cases, the pyroxsulam composition including the cloquintocet salt exhibits low levels of eye irritancy. In some cases, the pyroxsulam composition including the cloquintocet salt exhibits a lower potential for eye irritancy than the free acid form or ammonium salt form of cloquintocet. In some cases, the composition exhibits a neutral red release assay NRR50 value of at least 5 mg ae/mL of the cloquintocet salt. For example, the composition can exhibit an NRR50 value of at least 10, at least 20, at least 30, at least 40, at least 50, at least 60, at least 70, at least 80, at least 90, at least 100, or at least 110 mg ae/mL of the cloquintocet salt.

### VI. Formulations

The present disclosure also relates to formulations of the compositions and methods disclosed herein. In some cases, the formulation can be in the form of a single package formulation including both (a) pyroxsulam, or an agriculturally acceptable salt thereof, and (b) a cloquintocet salt, wherein the cloquintocet salt contains a cation as defined above. In some embodiments, the formulation can be in the form of a single package formulation including both (a) and (b) and further including at least one additive. In some cases, the formulation can be in the form of a two-package formulation, wherein one package contains (a) and optionally at least one additive while the other package contains (b) and optionally at least one additive. In some cases, of the two-package formulation, the formulation including (a) and optionally at least one additive and the formulation including (b) and optionally at least one additive are mixed before application and then applied simultaneously. In some cases, the mixing is performed as a tank mix (*i.e.,* the formulations are mixed immediately before or upon dilution with water). In some cases, the formulation including (a) and the formulation including (b) are not mixed but are applied sequentially (in succession), for example, immediately or within 1 hour, within 2 hours, within 4 hours, within 8 hours, within 16 hours, within 24 hours, within 2 days, or within 3 days, of each other.

In some cases, the formulation of (a) and (b) is an aqueous suspension concentrate. In some examples, the formulation of (a) and (b) is a suspension emulsion (i.e., a suspoemulsion) concentrate.

### A. Additives

The compositions and methods disclosed herein can also include the use of an additive. In some cases, the additive can be diluted in water or can be in a more concentrated form. In some cases, the additive is added sequentially. In some cases, the additive is added simultaneously. In some cases, the additive is premixed with the pyroxsulam or an agriculturally acceptable salt thereof. In some cases, the additive is premixed with the cloquintocet salt. In some cases, the additive is premixed with the pyroxsulam or an agriculturally acceptable salt thereof, and the cloquintocet salt. In some cases the additive may be tank-mixed with the compositions described herein at the point of use. When the compositions described herein are used in combination with an additive that is an active ingredient, the presently claimed compositions can be formulated with the other active ingredient or active ingredients as herbicidal solid or liquid compositions, tank mixed in water with the other active ingredient or active ingredients for simultaneous spray application, or applied sequentially with the other active ingredient or active ingredients in separate solid or spray applications.

### 1. Herbicides

In some cases, the additive is a pesticide. Exemplary pesticides that are herbicides include, but are not limited to, 2,4-D, acetochlor, aclonifen, ametryn, amicarbazone, 4-aminopicolinic acid based herbicides, such as halauxifen, halauxifen-methyl, and those described in U.S. Patent Nos. 7,314,849 and 7,432,227 to Balko, et al*.,* amidosulfuron, aminocyclopyrachlor, aminopyralid, aminotriazole, ammonium thiocyanate, anilofos, asulam, azimsulfuron, atrazine, beflubutamid, benazolin, benfuresate, bensulfuron-methyl, bentazone, bentazon-sodium, benzofenap, bifenox, bispyribac-sodium, bicyclopyrone, bromobutide, bromacil, bromoxynil, butachlor, butafenacil, butralin, butroxydim, carbetamide, cafenstrole, carfentrazone, carfentrazone-ethyl, chlormequat, clopyralid, chlorsulfuron, chlortoluron, cinidon-ethyl, clethodim, clodinafop-propargyl, clomeprop, clomazone, cloransulam-methyl, cyanazine, cyclosulfamuron, cycloxydim, cyhalofop , cyhalofop-butyl, daimuron, dicamba, dichlobenil, dichlorprop, dichlorprop-P, diclofop-methyl, diclosulam, diflufenican, diflufenzopyr, dimefuron, dimethachlor, diquat, diuron, s-ethyl dipropylcarbamothioate (EPTC), ET-751, esprocarb, ethoxysulfuron, etobenzanid, fenoxaprop, fenoxaprop-ethyl, fenoxaprop-ethyl+isoxidifen-ethyl, fenoxaprop-p-ethyl, fenoxasulfone, fentrazamide, flazasulfuron, florasulam, fluazifop, fluazifop-P-butyl, flucarbazone, flucabazone-sodium, flucetosulfuron (LGC-42153), flufenacet, flumetsulam, flumioxazin, flupyrsulfuron, flurochloridone, fluroxypyr, fluroxypyr-meptyl, flurtamone, gibberellic acid, glufosinate, glufosinate-ammonium, glyphosate, halosulfuron-methyl, haloxyfop-methyl, haloxyfop-R, haloxyfop-R-methyl, hexazinone, imazamethabenz, imazamox, imazapic, imazapyr, imazaquin, imazethapyr, imazosulfuron, indanofan, indaziflam, iodosulfuron, iodosulfuron-ethyl-sodium, ioxynil, ipfencarbazone, isoproturon, isoxaben, isoxaflutole, lactofen, linuron, MCPA, MCPB, mecoprop , mecoprop-P, mefenacet, mesosulfuron, mesosulfuron-ethyl sodium, mesotrione, metamifop, metazochlor, metazosulfuron, metosulam, metribuzin, metsulfuron, metsulfuron-methyl, molinate, MSMA, 1-napthaleneacetic acid, napropamide, norfurazon, orthosulfamuron, oryzalin, oxadiargyl, oxadiazon, oxazichlomefone, oxyfluorfen, paraquat, pendimethalin, penoxsulam, pentoxazone, pethoxamid, picloram, picolinafen, pinoxaden, piperophos, pretilachlor, primisulfuron, profluazol, profoxydim, prometon, propanil, propaquizafop, propyrisulfuron, propoxycarbazone, propyzamide, prosulfocarb, prosulfuron, pyraclonil, pyraflufen-ethyl, pyrasulfotole, pyroxasulfone, pyrazosulfuron, pyrazosulfuron-ethyl, pyrazolynate, pyribenzoxim (LGC-40863), pyributicarb, pyridate, pyriftalid, pyrimisulfan, pyroxsulam, pyroxasulfone, quinclorac, quinmerac, quizalofop-ethyl-D, quizalofop-P-ethyl, quizalofop-p-tefuryl, rimsulfuron, sethoxydim, simazine, sulfentrazone, sulfometuron, sulfosate, sulfosulfuron, tebuthiuron, tefuryltrione, tepraloxidim, terbacil, terbuthylazine, terbutryn, thenylchlor, thiazopyr, thiencarbazone-methyl, thifensulfuron, thifensulfuron-methyl, thiobencarb, topramezone, tralkoxydim, triafamone, triasulfuron, tribenuron, tribenuron-methyl, triafamone, triclopyr, and trifluralin, and agriculturally acceptable salts, choline salts, esters and mixtures thereof.

In some cases, the additive is a herbicide having the following formula 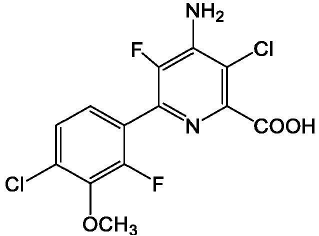 or a C₁-C₁₂ alkyl or C₇-C₁₂ arylalkyl ester or salt thereof, *e.g.,* the benzyl ester, referred to herein as Compound A.

In some cases, the described compositions include pyroxsulam, fluroxypyr-meptyl, and a cloquintocet salt. In some cases, the described compositions include pyroxsulam, fluroxypyr-meptyl, a cloquintocet salt, and a herbicide selected from florasulam, penoxsulam, diclosulam, cloransulam-methyl, flumetsulam, metosulam, halauxifen-methyl, and Compound A. In some cases, the composition includes halauxifen-methyl and/or florasulam.

In some cases, the described compositions include pyroxsulam, fluroxypyr-meptyl, a cloquintocet salt, and a herbicide selected from mesosulfuron, metsulfuron, thifensulfuron, tribenuron, triasulfuron, thiencarbazone, flucarbazone, flupyrsulfuron, sulfosulfuron.

In some cases, the described compositions include pyroxsulam, fluroxypyr-meptyl, a cloquintocet salt, and a herbicide selected from imazamox, imazapyr, and imazethapyr.

In some cases, the described compositions include pyroxsulam, fluroxypyr-meptyl, a cloquintocet salt, and a herbicide selected from the group consisting of pinoxaden, clodinafop, fenoxyprop, and tralkoxydim.

In some cases, the described compositions include pyroxsulam, fluroxypyr-meptyl, a cloquintocet salt, and a herbicide selected from pyrasulfotole, topramezone, and bicylopyrone.

In some cases, the described compositions include pyroxsulam, fluroxypyr-meptyl, a cloquintocet salt, and clopyralid. In some cases, the clopyralid is a clopyralid

salt. In some cases, the described compositions include pyroxsulam, fluroxypyr-meptyl, a cloquintocet salt, and aminopyralid.

In some cases, the described compositions include pyroxsulam, fluroxypyr-meptyl, a cloquintocet salt, and 2,4-D. In some cases, the described compositions include pyroxsulam, fluroxypyr-meptyl, a cloquintocet salt, and a herbicide selected from MCPA mad MCPB. In some cases, the described compositions include pyroxsulam, fluroxypyr-meptyl, a cloquintocet salt, and dicamba. In some embodiments, the described compositions include pyroxsulam, fluroxypyr-meptyl, a cloquintocet salt, and picloram. In some cases, the described compositions include pyroxsulam, fluroxypyr-meptyl, a cloquintocet salt, and triclopyr.

In some cases, the described compositions include pyroxsulam, fluroxypyr-meptyl, a cloquintocet salt, and a herbicide selected from tebuthiuron, isoxaben, thiazopyr, trifluralin and propyzamide.

In some cases, the described compositions include pyroxsulam, florasulam and a cloquintocet salt.

In some cases, the described compositions include pyroxsulam, a clopyralid salt and a cloquintocet salt.

In some cases, the described compositions include pyroxsulam, halauxifen-methyl and a cloquintocet salt.

In some cases, the described compositions include pyroxsulam, halauxifen-methyl, a cloquintocet salt, and a herbicide selected from florasulam, penoxsulam, diclosulam, cloransulam-methyl, flumetsulam, metosulam, and Compound A.

In some cases, the described compositions include pyroxsulam, halauxifen-methyl, a cloquintocet salt, and a herbicide selected from mesosulfuron, metsulfuron, thifensulfuron, tribenuron, triasulfuron, thiencarbazone, flucarbazone, flupyrsulfuron, and sulfosulfuron.

In some cases, the described compositions include pyroxsulam, halauxifen-methyl, a cloquintocet salt, and a herbicide selected from imazamox, imazapyr, and imazethapyr.

In some cases, the described compositions include pyroxsulam, halauxifen-methyl, a cloquintocet salt, and a herbicide selected from pinoxaden, clodinafop, fenoxyprop, and tralkoxydim.

In some cases, the described compositions include pyroxsulam, halauxifen-methyl, a cloquintocet salt, and a herbicide selected from pyrasulfotole, topramezone, and bicylopyrone.

In some cases, the described compositions include pyroxsulam, halauxifen-methyl, a cloquintocet salt, and clopyralid. In some cases, the described compositions include pyroxsulam, halauxifen-methyl, a cloquintocet salt, and aminopyralid.

In some cases, the described compositions include pyroxsulam, halauxifen-methyl, a cloquintocet salt, and 2,4-D. In some cases, the described compositions include pyroxsulam, halauxifen-methyl, a cloquintocet salt, and a herbicide selected from MCPA and MCPB. In some cases, the described compositions include pyroxsulam, halauxifen-methyl, a cloquintocet salt, and dicamba. In some cases, the described compositions include pyroxsulam, halauxifen-methyl, a cloquintocet salt, and picloram. In some cases, the described compositions include pyroxsulam, halauxifen-methyl, a cloquintocet salt, and triclopyr.

In some cases, the described compositions include pyroxsulam, halauxifen-methyl, a cloquintocet salt, and a herbicide selected from tebuthiuron, isoxaben, thiazopyr, trifluralin, and propyzamide.

In some cases, the described compositions include pyroxsulam, a cloquintocet salt, and a herbicide selected from florasulam, penoxsulam, diclosulam, cloransulam-methyl, flumetsulam, metosulam, and Compound A.

In some cases, the described compositions include pyroxsulam, a cloquintocet salt, and a herbicide selected from mesosulfuron, metsulfuron, thifensulfuron, tribenuron, triasulfuron, thiencarbazone, flucarbazone, flupyrsulfuron, and sulfosulfuron.

In some cases, the described compositions include pyroxsulam, a cloquintocet salt, and a herbicide selected from imazamox, imazapyr, and imazethapyr.

In some cases, the described compositions include pyroxsulam, a cloquintocet salt, and a herbicide selected from pinoxaden, clodinafop, fenoxyprop, and tralkoxydim.

In some cases, the described compositions include pyroxsulam, a cloquintocet salt, and a herbicide selected from pyrasulfotole, topramezone, and bicylopyrone.

In some cases, the pyroxsulam or an agriculturally acceptable salt thereof is provided in a premixed formulation with an additive. Exemplary premixes of pyroxsulam or an agriculturally acceptable salt thereof and an additive that are or have been commercially available include, but are not limited to, ADMITT^{®}, CRUSADER^{®}, QUASAR^{®}, MERIT^{®}, POWERFLEX^{®}, SIMPLICITY^{®}, ACROSS^{®}, and BROADWAY^{®} (trademarks of Dow AgroSciences, LLC ).

In some cases, the compositions do not contain clopyralid or a salt thereof, 2,4-D or a salt thereof, halauxifen-methyl and a salt of CQC.

### 2. Adjuvants

In some cases, the additive includes an agriculturally acceptable adjuvant.

Exemplary agriculturally acceptable adjuvants include, but are not limited to, antifreeze agents, antifoam agents, compatibilizing agents, sequestering agents, neutralizing agents and buffers, corrosion inhibitors, colorants, odorants, penetration aids, wetting agents, spreading agents, dispersing agents, thickening agents, freeze point depressants, antimicrobial agents, crop oil, safeners, adhesives (for instance, for use in seed formulations), surfactants, protective colloids, emulsifiers, tackifiers, and mixtures thereof.

Exemplary agriculturally acceptable adjuvants include, but are not limited to, crop oil concentrate (mineral oil (85%) +emulsifiers (15%)); nonylphenol ethoxylate; benzylcocoalkyldimethyl quaternary ammonium salt; blend of petroleum hydrocarbon, alkyl esters, organic acid, and anionic surfactant; C₉-C₁₁ alkylpolyglycoside; phosphate alcohol ethoxylate; natural primary alcohol (C₁₂-C₁₆) ethoxylate; di-sec-butylphenol EO-PO block copolymer; polysiloxane-methyl cap; nonylphenol ethoxylate+urea ammonium nitrate; emulsified methylated seed oil; tridecyl alcohol (synthetic) ethoxylate (8 EO); tallow amine ethoxylate (15 EO); and PEG(400) dioleate-99.

Exemplary surfactants (e.g., wetting agents, tackifiers, dispersants, emulsifiers) include, but are not limited to, the alkali metal salts, alkaline earth metal salts and ammonium salts of aromatic sulfonic acids, for example lignosulfonic acids, phenolsulfonic acids, naphthalenesulfonic acids, and dibutylnaphthalenesulfonic acid, and of fatty acids, alkyl- and alkylarylsulfonates, alkyl sulfates, lauryl ether sulfates and fatty alcohol sulfates, and salts of sulfated hexa-, hepta- and octadecanols, and also of fatty alcohol glycol ethers, condensates of sulfonated naphthalene and its derivatives with formaldehyde, condensates of naphthalene or of the naphthalene sulfonic acids with phenol and formaldehyde, polyoxyethylene octylphenol ether, ethoxylated isooctyl-, octyl- or nonylphenol, alkylphenyl or tributylphenyl polyglycol ether, alkyl aryl polyether alcohols, isotridecyl alcohol, fatty alcohol/ethylene oxide condensates, ethoxylated castor oil, polyoxyethylene alkyl ethers or polyoxypropylene alkyl ethers, lauryl alcohol polyglycol ether acetate, sorbitol esters, lignosulfite waste liquors and proteins, denatured proteins, polysaccharides (*e.g.*, methylcellulose), hydrophobically modified starches, polyvinyl alcohol, polycarboxylates, polyalkoxylates, polyvinyl amine, polyethyleneimine, polyvinylpyrrolidone and copolymers thereof.

Exemplary thickeners include, but are not limited to, polysaccharides, such as xanthan gum, and organic and inorganic sheet minerals, and mixtures thereof.

Exemplary antifoam agents include, but are not limited to, silicone emulsions, long-chain alcohols, fatty acids, salts of fatty acids, organofluorine compounds, and mixtures thereof.

Exemplary antimicrobial agents include, but are not limited to, bactericides based on dichlorophen and benzyl alcohol hemiformal, and isothiazolinone derivatives, such as alkylisothiazolinones and benzisothiazolinones, and mixtures thereof.

Exemplary antifreeze agents, include, but are not limited to ethylene glycol, propylene glycol, urea, glycerol, and mixtures thereof.

Exemplary colorants include, but are not limited to, the dyes known under the names Rhodamine B, pigment blue 15:4, pigment blue 15:3, pigment blue 15:2, pigment blue 15:1, pigment blue 80, pigment yellow 1, pigment yellow 13, pigment red 112, pigment red 48:2, pigment red 48:1, pigment red 57:1, pigment red 53:1, pigment orange 43, pigment orange 34, pigment orange 5, pigment green 36, pigment green 7, pigment white 6, pigment brown 25, basic violet 10, basic violet 49, acid red 51, acid red 52, acid red 14, acid blue 9, acid yellow 23, basic red 10, basic red 108, and mixtures thereof.

Exemplary adhesives include, but are not limited to, polyvinylpyrrolidone, polyvinyl acetate, polyvinyl alcohol, tylose, and mixtures thereof.

### 3. Carriers

In some cases, the additive includes a carrier. In some cases, the additive includes a liquid or solid carrier. In some cases, the additive includes an organic or inorganic carrier. Exemplary liquid carriers include, but are not limited to, petroleum fractions or hydrocarbons such as mineral oil, aromatic solvents or paraffinic oils; vegetable oils such as soybean oil, rapeseed oil, olive oil, castor oil, sunflower seed oil, coconut oil, corn oil, cottonseed oil, linseed oil, palm oil, peanut oil, safflower oil, sesame oil or tung oil; esters of the above vegetable oils, esters of monoalcohols or dihydric, trihydric, or other lower polyalcohols (4-6 hydroxy containing), such as 2-ethyl hexyl stearate, n-butyl oleate, isopropyl myristate, propylene glycol dioleate, di-octyl succinate, di-butyl adipate, di-octyl phthalate; esters of mono, di and polycarboxylic acids; toluene, xylene, petroleum naphtha, crop oil, acetone, methyl ethyl ketone, cyclohexanone, trichloroethylene, perchloroethylene, ethyl acetate, amyl acetate, butyl acetate, propylene glycol monomethyl ether and diethylene glycol monomethyl ether, methyl alcohol, ethyl alcohol, isopropyl alcohol, amyl alcohol, ethylene glycol, propylene glycol, glycerine, N-methyl-2-pyrrolidinone, N,N-dimethyl alkylamides, dimethyl sulfoxide, liquid fertilizers, and water as well as mixtures thereof. Exemplary solid carriers include, but are not limited to, silicas, silica gels, silicates, talc, kaolin, limestone, lime, chalk, bole, loess, clay, dolomite, diatomaceous earth, calcium sulfate, magnesium sulfate, magnesium oxide, ground synthetic materials, pyrophyllite clay, attapulgus clay, kieselguhr, calcium carbonate, bentonite clay, Fuller's earth, cottonseed hulls, wheat flour, soybean flour, pumice, wood flour, walnut shell flour, lignin, ammonium sulfate, ammonium phosphate, ammonium nitrate, ureas, cereal meal, tree bark meal, wood meal and nutshell meal, cellulose powders, and mixtures thereof.

### VII. Methods of Use

The compositions disclosed herein can be applied in any known technique for applying herbicides. Exemplary application techniques include, but are not limited to, spraying, atomizing, dusting, spreading, or direct application into water (in-water). The method of application can vary depending on the intended purpose. In some cases, the method of application can be chosen to ensure the finest possible distribution of the compositions disclosed herein.

### A. Control of undesirable vegetation

In some cases, a method of controlling undesirable vegetation which comprises contacting the vegetation or the locus thereof with or applying to the soil or water to prevent the emergence or growth of vegetation the compositions disclosed herein.

The compositions disclosed herein can be applied pre-emergence (before the emergence of undesirable vegetation) or post-emergence (*i.e.*, during and/or after emergence of the undesirable vegetation). In some cases, the composition is applied postemergence to the undesirable vegetation.

When the compositions are used in crops, the compositions can be applied after seeding and before or after the emergence of the crop plants. In some cases, the compositions disclosed herein show good crop tolerance even when the crop has already emerged, and can be applied during or after the emergence of the crop plants. In some cases, when the compositions are used in crops, the compositions can be applied before seeding of the crop plants.

In some cases, the compositions disclosed herein are applied to vegetation or an area adjacent to the vegetation or applying to soil or water to prevent the emergence or growth of vegetation by spraying (e.g., foliar spraying). In some cases, the spraying techniques use, for example, water as carrier and spray liquor rates of from 2 liters per hectare (L/ha) to 2000 L/ha (e.g., from 10-1000 L/ha, or from 50-500 L/ha). In some cases, the compositions disclosed herein are applied by the low-volume or the ultra-low-volume method, wherein the application is in the form of micro granules. In some cases, wherein the compositions disclosed herein are less well tolerated by certain crop plants, the compositions can be applied with the aid of the spray apparatus in such a way that they come into little contact, if any, with the leaves of the sensitive crop plants while reaching the leaves of undesirable vegetation that grows underneath or on the bare soil (e.g., post-directed or lay-by). In some cases, the compositions disclosed herein can be applied as dry formulations (e.g., granules, DG's, etc.) into water.

In some cases, wherein the undesirable vegetation is treated post-emergence, the compositions disclosed herein are applied by foliar application. In some cases, herbicidal activity is exhibited by the compounds of the mixture when they are applied directly to the plant or to the locus of the plant at any stage of growth or before planting or emergence. The effect observed can depend upon the type of undesirable vegetation to be controlled, the stage of growth of the undesirable vegetation, the application parameters of dilution and spray drop size, the particle size of solid components, the environmental conditions at the time of use, the specific compound employed, the specific adjuvants and carriers employed, the soil type, as well as the amount of chemical applied. In some cases, these and other factors can be adjusted to promote non-selective or selective herbicidal action.

The compositions and methods disclosed herein can be used to control undesired vegetation in a variety of crop and non-crop applications. In some cases, the compositions and methods disclosed herein can be used for controlling undesired vegetation in crops. Exemplary crops include, but are not limited to, wheat, barley, triticale, rye, teff, oats, corn, sorghum, rice, sugar cane and pasture grasses.

In some cases, the compositions and methods disclosed herein can be used for controlling undesired vegetation in non-crop areas. Exemplary non-crop areas include, but are not limited to, turf, pasture, fallow, wildlife management areas, or rangeland. In some cases, the compositions and methods disclosed herein can be used in industrial vegetation management (IVM) or for utility, pipeline, roadside, and railroad rights-of-way applications. In some cases, the compositions and methods disclosed herein can also be used in forestry (e.g., for site preparation or for combating undesirable vegetation in plantation forests). In some cases, the compositions and methods disclosed herein can be used to control undesirable vegetation in conservation reserve program (CRP) lands, aquatics, trees, vines, grasslands, and grasses grown for seeds. In some cases, the compositions and methods disclosed herein can be used on lawns (e.g., residential, industrial, and institutional), golf courses, parks, cemeteries, athletic fields, and sod farms.

### B. Control of undesirable vegetation in resistant crops

The compositions and methods disclosed herein can also be used in crop plants that are resistant to, for instance, herbicides, pathogens, and/or insects. The compositions and methods described herein may be used to control undesirable vegetation in glyphosate-tolerant-, 5-enolpyruvylshikimate-3-phosphate (EPSP) synthase inhibitor-tolerant-, glufosinate-tolerant-, glutamine synthetase inhibitor-tolerant-, dicamba-tolerant-, phenoxy auxin-tolerant-, pyridyloxy auxin-tolerant-, synthetic auxin-tolerant-, auxin transport inhibitor-tolerant-, aryloxyphenoxypropionate-tolerant-, cyclohexanedione-tolerant-, phenylpyrazoline-tolerant-, acetyl CoA carboxylase (ACCase) inhibitor-tolerant-, imidazolinone-tolerant-, sulfonylurea-tolerant-, pyrimidinylthiobenzoate-tolerant-, triazolopyrimidine-tolerant-, sulfonylaminocarbonyltriazolinone-tolerant-, acetolactate synthase (ALS) or acetohydroxy acid synthase (AHAS) inhibitor-tolerant-, 4-hydroxyphenyl-pyruvate dioxygenase (HPPD) inhibitor-tolerant-, phytoene desaturase inhibitor-tolerant-, carotenoid biosynthesis inhibitor-tolerant-, protoporphyrinogen oxidase (PPO) inhibitor-tolerant-, cellulose biosynthesis inhibitor-tolerant-, mitosis inhibitor-tolerant-, microtubule inhibitor-tolerant-, very long chain fatty acid inhibitor-tolerant-, fatty acid and lipid biosynthesis inhibitor-tolerant-, photosystem I inhibitor-tolerant-, photosystem II inhibitor-tolerant-, triazine-tolerant- and bromoxynil-tolerant-crops (such as, but not limited to, soybean, cotton, canola/oilseed rape, rice, cereals, corn, sorghum, sunflower, sugar beet, sugarcane, turf, etc.), for example, in conjunction with glyphosate, EPSP synthase inhibitors, glufosinate, glutamine synthase inhibitors, dicamba, phenoxy auxins, pyridyloxy auxins, synthetic auxins, auxin transport inhibitors, aryloxyphenoxypropionates, cyclohexanediones, phenylpyrazolines, ACCase inhibitors, imidazolinones, sulfonylureas, pyrimidinylthiobenzoates, triazolopyrimidines, sulfonylaminocarbonyltriazolinones, ALS or AHAS inhibitors, HPPD inhibitors, phytoene desaturase inhibitors, carotenoid biosynthesis inhibitors, PPO inhibitors, cellulose biosynthesis inhibitors, mitosis inhibitors, microtubule inhibitors, very long chain fatty acid inhibitors, fatty acid and lipid biosynthesis inhibitors, photosystem I inhibitors, photosystem II inhibitors, triazines, and bromoxynil. The compositions and methods may be used in controlling undesirable vegetation in crops possessing multiple or stacked traits conferring tolerance to multiple chemistries and/or inhibitors of multiple modes of action. In some cases, the compositions described herein are used in combination with herbicides that are selective for the crop being treated and which complement the spectrum of weeds controlled by these compounds at the application rate employed. In some cases, the compositions described herein and other complementary herbicides are applied at the same time, either as a combination formulation or as a tank mix, or sequentially.

In some cases, the compositions and methods may be used in controlling undesirable vegetation in phenoxy acid tolerant crops, wherein the phenoxy acid tolerant crops have tolerance conferred by an AAD12 gene. In some cases, the compositions and methods may be used in controlling undesirable vegetation that is resistant to auxinic herbicides.

The compositions and methods may be used in controlling undesirable vegetation in crops possessing agronomic stress tolerance (including but not limited to drought, cold, heat, salt, water, nutrient, fertility, pH), pest tolerance (including but not limited to insects, fungi and pathogens) and crop improvement traits (including but not limited to yield; protein, carbohydrate, or oil content; protein, carbohydrate, or oil composition; plant stature and plant architecture).

### C. Undesirable vegetation

The herbicidal compositions prepared disclosed herein are effective against a variety of types of undesirable vegetation. In some cases, the compositions disclosed herein can be used for controlling broadleaf weeds. Exemplary broadleaf weeds include, but are not limited to, *Polygonum* species such as wild buckwheat *(Polygonum convolvolus), Amaranthus* species such as pigweed *(Amaranthus retroflexus), Chenopodium* species such as common lambsquarters *(Chenopodium album L.*)*, Sida* species such as prickly sida *(Sida spinosa L.*)*, Ambrosia* species such as common ragweed *(Ambrosia artemisiifolia), Acanthospermum* species, *Anthemis* species, *Atriplex* species, *Brassica* species, *Cirsium* species, *Convolvulus* species, *Conyza* species, such as horseweed *(Conyza canadensis), Cassia* species, *Commelina* species, *Datura* species, *Euphorbia* species, *Geranium* species, *Galinsoga* species, morning-glory *(Ipomoea* species), *Lamium* species, *Malva* species, *Matricaria* species, *Prosopis* species, *Rumex* species, *Sisymbrium* species, *Solanum* species, *Trifolium* species, *Xanthium* species, *Veronica* species, *Viola* species such as wild pansy(*Viola tricolor*), common chickweed *(Stellaria media),* velvetleaf *(Abutilon theophrasti),* Hemp sesbania *(Sesbania exaltata* Cory), *Anoda cristata, Bidens pilosa, Brassica kaber, Capsella bursa-pastoris, Centaurea cyanus, Galeopsis tetrahit, Galium aparine, Helianthus annuus, Desmodium tortuosum, Kochia scoparia, Medicago arabica, Mercurialis annua, Myosotis arvensis, Papaver rhoeas, Raphanus raphanistrum, Salsola kali, Sinapis arvensis, Sonchus arvensis, Thlaspi arvense, Tagetes minuta, Richardia brasiliensis, Plantago major,* and *Plantago lanceolata.* In some embodiments, the undesirable vegetation includes annual gasses such as *Alopecurus* species, *Apera spica-venti, Avena* species such as wild oat (*Avena fatua*)*, Bromus* species, *Lolium* species such as annual ryegrass (*Lolium multiflorum subsp. gaudini*)*, Seteria* species, and *Panicum* species. In some cases, the undesirable vegetation is selected from the group consisting of wild oat (*Avena fatua*)*,* annual ryegrass (*Lolium multiflorum subsp. gaudini*)*,* and combinations thereof.

### D. Application rates

The pyroxsulam, or an agriculturally acceptable salt thereof as described herein, can be used in an amount sufficient to induce a herbicidal effect. In some cases, the pyroxsulam or agriculturally acceptable salt thereof is applied to vegetation or an area adjacent to the vegetation or applied to soil or water to prevent the emergence or growth of vegetation in an amount of 4 grams of active ingredient per hectare (g ai/ha) or greater (e.g., 6 g ai/ha or greater, 8 g ai/ha or greater, 10 g ai/ha or greater, 12 g ai/ha or greater, 14 g ai/ha or greater, 16 g ai/ha or greater, 18 g ai/ha or greater, 20 g ai/ha or greater, 22 g ai/ha or greater, 24 g ai/ha or greater, 26 g ai/ha or greater, 28 g ai/ha or greater, 30 g ai/ha or greater, 32 g ai/ha or greater, 34 g ai/ha or greater, 36 g ai/ha or greater, or 38 g ai/ha or greater). In some cases, the pyroxsulam or agriculturally acceptable salt thereof is applied to vegetation or an area adjacent to the vegetation or applied to soil or water to prevent the emergence or growth of vegetation in an amount of 40 g ai/ha or less (e.g., 38 g ai/ha or less, 36 g ai/ha or less, 34 g ai/ha or less, 32 g ai/ha or less, 30 g ai/ha or less, 28 g ai/ha or less, 26 g ai/ha or less, 24 g ai/ha or less, 22 g ai/ha or less, 20 g ai/ha or less, 18 g ai/ha or less, 16 g ai/ha or less, 14 g ai/ha or less, 12 g ai/ha or less, 10 g ai/ha or less, 8 g ai/ha or less, or 6 g ai/ha or less). In some cases, the pyroxsulam or agriculturally acceptable salt thereof is applied to vegetation or an area adjacent to the vegetation or applied to soil or water to prevent the emergence or growth of vegetation in an amount of from 4-40 g ai/ha (e.g., from 6-30 g ai/ha, from 8-25 g ai/ha, or from 10-21 g ai/ha).

The cloquintocet salt described herein can be used in an amount sufficient to induce a safening effect on the pyroxsulam. In some cases, the cloquintocet salt is applied to vegetation or an area adjacent to the vegetation or applied to soil or water in an amount of 10 grams of acid equivalent per hectare (g ae/ha) or greater (e.g., 15 g ae/ha or greater, 20 g ae/ha or greater, 25 g ae/ha or greater, 30 g ae/ha or greater, 35 g ae/ha or greater, 40 g ae/ha or greater, 45 g ae/ha or greater, 50 g ae/ha or greater, 55 g ae/ha or greater, 60 g ae/ha or greater, 65 g ae/ha or greater, 70 g ae/ha or greater, or 75 g ae/ha or greater). In some cases, the cloquintocet salt is applied to vegetation or an area adjacent to the vegetation or applied to soil or water in an amount of 80 g ae/ha or less (e.g., 75 g ae/ha or less, 70 g ae/ha or less, 65 g ae/ha or less, 60 g ae/ha or less, 55 g ae/ha or less, 50 g ae/ha or less, 45 g ae/ha or less, 40 g ae/ha or less, 35 g ae/ha or less, 30 g ae/ha or less, 25 g ae/ha or less, 20 g ae/ha or less, or 15 g ae/ha or less). In some cases, the cloquintocet salt is applied to vegetation or an area adjacent to the vegetation or applied to soil or water to prevent the emergence or growth of vegetation in an amount of from 10-80 g ae/ha (e.g., from 20-75 g ae/ha, from 30-70 g ae/ha, or from 40-65 g ae/ha).

By way of non-limiting illustration, examples of certain cases of the present disclosure are given below. Parts and percentages are on a per weight basis unless otherwise indicated.

### EXAMPLES

Only a cloquintocet salt, wherein the cloquintocet salt comprises a cation selected from the group consisting of monoethanolammonium, diethanolammonium, triethanolammonium, monoisopropanolammonium, diisopropanolammonium, triisopropanolammonium, choline, N N-dimethylethanolammonium dimethylammonium, isopropylammonium, or mixtures thereof is used in the claimed composition. If a different salt or an ester of cloquintocet or the acid itself are used, these embodiments are comparative.

### Example 1

### Preparation and Analysis of Cloquintocet Salts

Ten cloquintocet acid (CQC) organoammonium salts were prepared: mono-, di- and triethanolammonium; mono-, di- and triisopropanolammonium; N,N-dimethylethanolammonium, choline; isopropylammonium; and dimethylammonium. The ammonium and sodium salts of cloquintocet acid were also prepared.

A 10 wt% slurry of cloquintocet acid was prepared by adding the free acid (178.2 g ai; 0.75 mole) to a 3 L plastic beaker containing deionized water (1645 g) while stirring with an IKA stirrer fitted with a 1.5 inch saw tooth blade. A pH/temperature probe was fitted to the inside of the beaker and submersed in the slurry to monitor the solution pH and temperature during the base addition. The stirrer agitation speed was between 1000 and 1200 rpm. The base was added slowly via a disposable pipette to the slurry to slightly less than molar equivalence (99-99.5%). Complete solubilization of the free acid generally occurred between a pH of 5.5 to 6.0. The final solution pH of the salt solution concentrates was a nominal 6.5 ± 0.3. The only pH outlier was the triethanolammonium salt which had a neat solution pH of 6.0. Toward the end of the neutralization the 1% (wt) dilution pH was also measured. The two values were usually within 0.1-0.2 units of each other.

The exception to the above procedure occurred during the preparation of the ammonium salt. After the final ammonia addition, the solution gelled (taffy in appearance). The slurry was transferred to a 316 stainless steel beaker, additional water (572 g) was added, and the slurry was warmed to approximately 40 °C by means of a hot plate. A complete solution was obtained.

The sodium salt (comparative sample) was prepared via saponification of cloquintocet-mexyl with sodium hydroxide and water. The sodium salt solution was then transferred to a 316 stainless steel cake pan and placed in a forced air convection oven set between 70-80°C. Generally, 2 days were required to remove the excess water from the prepared CQC salts. After completion of drying, those salts that were solids were ground in a mortar and pestle and sieved thru a 14 mesh (1410 micron) screen.

The solidified salts were assayed for chemical purity and water content.

Isolation of the N,N-dimethylethanolammonium salts by the above drying procedure resulted in poor accountability in terms of chemical assay and water. This may have been caused by degradation during the isolation process. These two salts were prepared again as described above and then the excess water was removed via drying in a vacuum oven heated to a maximum of 50°C for approximately 2 days.

### Chemical Assay and Water Analysis of the Described Cloquintocet Salts

The salts were assayed for cloquintocet acid via a high pressure liquid chromatography (HPLC) procedure and then the salt active ingredient was calculated from the acid equivalence. The results are reported as wt%. The water content of the solid cloquintocet salts was determined using the Karl Fisher (KF) method and reported as wt%. Chemical assay and water analysis were in line with the other salts which were 100 wt% ± 3 % for total accountability. The chemical assays for the salt active ingredient (ai) and water analysis are shown in Table 1. The majority of the salts showed a propensity to retain water.

**Table 1. Chemical Assays of the Neat Cloquintocet Salts.**

| **Salt** | **Salt MW** | **Acid equivalent** | **Chemical Assay, wt% ae** | **Calculated wt% ai** | **KF water, wt%** | **Calc. wt% ai + water** |
|---|---|---|---|---|---|---|
| Monoethanolammonium | 299 | 0.8 | 79 | 100 | 0.2 | 100 |
| Diethanolammonium | 343 | 0.7 | 68 | 98 | 2 | 100 |
| Triethanolammonium | 387 | 0.6 | 56 | 92 | 6 | 98 |
| N,N-dimethylethanolammonium | 327 | 0.7 | 73 | 100 | 2 | 103 |
| Isopropanolammonium | 313 | 0.8 | 73 | 96 | 2 | 99 |
| Diisopropanolammonium | 371 | 0.6 | 60 | 93 | 6 | 99 |
| Triisopropanolammonium monohydrate | 447 | 0.5 | 53 | 99 | 6 | 105 |
| Dimethylammonium | 283 | 0.8 | 81 | 97 | 4 | 100 |
| Isopropylammonium | 298 | 0.8 | 80 | 101 | 1 | 102 |
| Ammonium (CE)* | 255 | 0.9 | 91 | 98 | 2 | 100 |
| Choline | 341 | 0.7 | 62 | 88 | 10 | 98 |
| Sodium (CE) | 260 | 0.9 | 88 | 96 | 4 | 100 |

| | | | | | | |
|---|---|---|---|---|---|---|
| * CE: Comparative Example | | | | | | |

### Measurement of the Water Solubility of the Described Cloquintocet Salts

### A. Apparatus

A half jacketed 3-neck 500 ml glass flask connected to a circulation water temperature bath capable of maintaining the solution temperature to ± 0.1 °C was used. The center neck was fitted with a glass stirring rod connected to an IKA electric motor. A teflon rounded, paddle stirrer blade was attached to the rod. One of the outer necks was fitted with a thermometer calibrated to 0.1 °C. The other neck was fitted with a glass stopper and was used to withdraw a sample for analysis.

### B. Procedure

1. The valve on the return line from the flask to the bath was first opened. The circulation bath was turned on. The temperature set point for the bath was set ~ 0.4-0.6°C below the desired temperature for the solution in the flask, i.e., 20.0°C. The flask was filled with 150 ml of DI water. The pH of the DI water was recorded. The stirrer rpm was slowly adjusted to 70-80 rpm.
2. The individual salt was slowly added through the open neck. A funnel was inserted into the neck to avoid collecting solids in the neck opening. The salt continued to be added until a slight excess of salt was visible in the solution. This required several hours in most cases depending on the salt's solubility. The amount of salt added was recorded. Using this value, the approximate salt concentration was calculated and provided as an approximate concentration.
3. Under continuous stirring the solution was sampled at the end of the day and the next morning by withdrawing approximately 2-3 ml using a disposable pipette. This solution was added to the open end of a 3 ml Lure-Lok Tip syringe fitted with a 0.2 µm Nylon Whatman filter. The plunger was then inserted into the syringe and the solution was filtered into a 7 ml glass vial. The vial was closed with non-aluminum lined cap. Samples were stored at laboratory ambient temperature until assayed.

The CQC salt water solubility data is shown in Table 2. Except for the ammonium and triethanolammonium salts, the CQC salts showed appreciable solubility at 20°C. CQC acid has a solubility of about 1.4 wt% in a pH 7 buffer solution. The diethanolammonium and isopropanolammonium solubility data represents a minimum value since their solubility values do not reflect saturation. At the solubility levels reported, their solutions were viscous and difficult to sample.

**Table 2. Water solubility (at 20°C) of cloquintocet salts.**

| **Salt** | **Water Solubility wt% ae** | **AE** | **Calculated water solubility wt% ai** | **Neat pH** | **Density, g/mL** |
|---|---|---|---|---|---|
| Monoethanolamine | 26 | 0.8 | 33 | 6.3 | 1.1 |
| Diethanolamine¹ | 40 | 0.7 | 58 | 6.6 | 1.2 |
| Triethanolamine¹ | 9.2 | 0.6 | 15 | 6.1 | 1.0 |
| Isopropanolamine¹ | 31 | 0.8 | 41 | 7.4 | 1.1 |
| Diisopropanolamine | 30 | 0.6 | 46 | 6.4 | 1.1 |
| Triisopropanolamine | 36 | 0.5 | 50 | 6.4 | 1.1 |
| Choline | 31 | 0.7 | 45 | 6.8 | 1.1 |
| N,N-dimethylethanolamine | 36 | 0.7 | 36 | 5.7 | 1.1 |
| Dimethylamine | 40 | 0.8 | 48 | 6 | 1.2 |
| Isopropylamine | 31 | 0.8 | 38 | 5.7 | 1.1 |
| Ammonium (CE) | 2.3 | 0.9 | 2.5 | 5.7 | 1.0 |
| Acid² (CE) | 1.4 | 1 | 1.4 | 5.6 | 1.0 |

| | | | | | |
|---|---|---|---|---|---|
| ¹Minimum solubility due to high viscosity, ²pH 7 buffer solution, | | | | | |

### Example 2

### Preparation of Representative Samples of the Herbicide Compositions Described Herein

**Table 3. Representative Ingredient Amounts in the SC Herbicide Compositions Described Herein**

| **Ingredient** | **Role** | **Amount (wt%)** |
|---|---|---|
| pyroxsulam | active ingredient | 0.1 - 10 |
| herbicide 1¹ | active ingredient | 0 - 20 |
| herbicide 2¹ | active ingredient | 0 - 20 |
| cloquintocet salt | herbicide safener | 2 - 20 |
| silicone emulsion | antifoam | 0.1 - 1 |
| polymeric surfactant | wetter | 1 - 10 |
| anionic surfactant | dispersant | 1 - 10 |
| thickening gel | rheology additive | 0.05 - 5 |
| propylene glycol | antifreeze | 1 - 10 |
| water | solvent/diluent | 30 - 90 |

| | | |
|---|---|---|
| ¹ The compositions described herein may contain one or more additional herbicide active ingredients selected from the additive pesticide group described herein. | | |

### Sample 1. Pyroxsulam/CQC-TIPA SC

In the following order these ingredients were added to a 1 L plastic beaker with stirring: pyroxsulam (11.8 g, 97.1 wt%), cloquintocet-triisopropanolammonium (CQC-TIPA; 154.8 g, 15.5 wt% in water), 20 wt% Pluronic P105 in water (68.6 g), Polyfon H (13.7 g), propylene glycol (17.2 g), 1.5 % Kelzan ASX gel in water (29.2 g), 0.1 % Proxel GXL (0.25 g), Dow Corning Antifoam 1400 (0.65 g) and water (102.5 g). The blend was stirred under high shear using a Silverson L4R mixer for approximately 2 minutes. The slurry was then passed thru a wet mill at 5,000 rpm filled with 1-1.3 mm glass beads. After 2 passes the d(0.5) and d(0.9) particle sizes were 5.66 and 15.75 µm, respectively. The density of the suspension was 1.058 g/ml and the undiluted pH was 6.27. The chemical assay was 31 g/L of pyroxsulam and 63.2 g ae/L of cloquintocet-TIPA (114 g ai)/L. The complete composition of Sample 1 is shown in Table 4.

**Table 4. Composition of Sample 1**

| **Ingredient** | **Role** | **Amount (g/L)** | **Amount (wt%)** |
|---|---|---|---|
| pyroxsulam¹ | active ingredient | 31.0 | 2.93 |
| cloquintocet-TIPA | herbicide safener | 113.7 | 10.75 |
| Dow Corning AF 1400 | antifoam | 1.7 | 0.16 |
| Pluronic P105 | wetter | 36 | 3.4 |
| Polyfon H | dispersant | 36 | 3.4 |
| Kelzan ASX | rheology additive | 1.2 | 0.11 |
| Proxel GXL | biocide | 0.6 | 0.057 |
| propylene glycol | antifreeze | 45 | 4.25 |
| water | solvent/diluent | 793 | 74.93 |

### Sample 2. Preparation of a Pyroxsulam/Halauxifen-methyl/CQC-TIPA Suspension Concentrate

Triisopropanolamine (TIPA; 27.0 g, 90% active) was added to 220 gram of water followed by powdered CQC acid (30.505 g). The mixture was mixed until all CQC acid solids dissolved. A first dispersant (2.5 g), a second dispersant (1.75 g), a wetting agent (0.45 g), pyroxsulam (14.68 g), halauxifen-methyl (5.14 g) and an antifoam agent (0.75 g) were then added to the above CQC-TIPA solution with overhead mixing. The mixture was wet-milled for 10 minutes @ 3800 rpm (particle size was measured: d(0.5) = 1.99 µm, d(0.9) = 6.06 µm, VMD = 2.85 µm). 53.39 g of water and 30 g of propylene glycol were then added to the wet-milled mixture, followed by addition of a first rheology additive stock solution (80 g, 5 wt% aqueous solution), and a second rheology additive stock solution (33.33 g, 3 wt% aqueous solution). 0.5 g of Proxel GXL was added at the end. The mixture was mixed using overhead mixing with a Cowles disc. The composition of Sample 2 is shown in Table 5. The storage stability of sample 2 as determined using the Wet Sieve Test with a 325 mesh (45 µm) is shown in Table 6. The storage stability of sample 2 as determined using the particle size is shown in Table 7.

**Table 5. Composition of Sample 2**

| **Ingredient** | **Weight (g)** | **Weight %** |
|---|---|---|
| halauxifen-methyl (97%) | 5.14 | 1.000 |
| pyroxsulam (97%) | 14.68 | 2.850 |
| cloquintocet acid (99%) | 30.51 | 6.040 |
| TIPA (90%) | 27.00 | 4.860 |
| first dispersant | 2.50 | 0.500 |
| second dispersant | 1.75 | 0.35 |
| wetter | 0.45 | 0.090 |
| antifoam | 0.75 | 0.150 |
| first rheology additive (5% in water) | 80.00 | 0.800 |
| second rheology additive (3% in water) | 33.33 | 0.200 |
| Proxel GXL | 0.50 | 0.100 |
| propylene glycol | 30.00 | 6.000 |
| water | 273.39 | 77.060 |
| Total | 500.00 | 100.00 |

**Table 6. Storage stability of Sample 2**

| | **Time/Temperature** | **Wt% Solid Collected on Sieve** |
|---|---|---|
| **Wet Sieve Test 325 mesh (45 µm)** | 2-wks/54°C | 0.00 |
| | 2-wks/FT | 0.00 |
| | 2-wks/-10C | 0.00 |
| | 2-wks/RT | 0.00 |
| | 8-wks/40C | 0.00 |

**Table 7. Storage stability of Sample 2**

| | **Time/Temperature** | **Particle Size** |
|---|---|---|
| **Particle Size d(0.5/0.9) in microns (µm)** | 2-wks/54°C | 3.250/7.337 |
| | 2-wks/FT | 3.558/8.007 |
| | 2-wks/-10C | 3.406/7.720 |
| | 2-wks/RT | 3.424/7.752 |
| | 8-wks/40C | 3.264/7.370 |

### Sample 3. Pyroxsulam/Clopyralid-monoethanololamine/Fluroxypyr-meptyl/CQC-monoethanololamine Suspoemulsion (aqueous suspension emulsion)

Using the ingredients shown in Table 8, a suspoemulsion composition containing clopyralid-monoethanolamine, fluroxypyr-meptyl, pyroxsulam and cloquintocet-monoethanolamine was prepared following general formulation preparative procedures.

**Table 8. Composition of Sample 3**

| **Ingredient** | **Concentration(g/L)** | **Concentration (wt%)** |
|---|---|---|
| clopyralid-monoethanolamine | 118.58 | 11.34 |
| fluroxypyr-meptyl | 129.68 | 12.4 |
| pyroxsulam | 12.8 | 1.22 |
| cloquintocet acid | 26.88 | 2.57 |
| monoethanolamine | 6.36 | 0.61 |
| emulsifier 1 | 38.99 | 3.73 |
| emulsifier 2 | 19.47 | 1.86 |
| emulsion stabilizer | 3.47 | 0.33 |
| wetting agent | 1.14 | 0.11 |
| propylene glycol | 37.75 | 3.61 |
| rheology additive 1 | 0.28 | 0.0268 |
| rheology additive 2 | 0.45 | 0.043 |
| Proxel GXL | 1.0 | 0.0956 |
| antifoam | 5.29 | 0.51 |
| aromatic solvent | 350.62 | 33.52 |
| water | 290.82 | 27.8 |
| dispersant 1 | 2.09 | 0.20 |
| dispersant 2 | 0.36 | 0.0344 |

### Example 3

### Evaluation of Eye Irritation Potential of Aqueous Solutions of the CQC Salts Using the Neutral Red Release (NRR) Assay

The purpose for this study was to conduct a preliminary investigation of the eye irritation potential of the more soluble CQC salt solutions using the *in vitro* Neutral Red Release (NRR) assay. The NRR assay is a screening assay designed to identify chemicals that have eye irritation potential. The assay is intended to identify chemicals that cause immediate cytotoxic damage to cell membranes. Specifically, the objective was to utilize this screening assay to quantitatively differentiate the CQC salts based on their eye irritation potential. A solution of CQC free acid was included for comparative purposes.

All materials were diluted (vol/vol; in phosphate buffered saline (PBS)) directly from the neat materials. Each test material was tested at eight concentrations, i.e., 0.5, 1, 2.5, 5, 7.5, 10, 60, 100% (vol/vol) and the concentration that resulted in release of 50% of preloaded neutral red (NR) dye (NRR50) compared to negative controls was determined. To enable appropriate interpretation and comparison across the salts, the NRR50 value for each test chemical was further corrected to its acid equivalent concentration (NRR50, mg ae/mL).

The NRR assay was performed in a 96-well format, with triplicate wells of each test material concentration for each assay. A total of two independent assay replicates were conducted on separate days. Sodium dodecyl sulfate (SDS; CAS # 151-21-3) at 5 mg/ml was used as the positive control and PBS as negative control.

Results for the positive control and the test material were evaluated relative to the criteria specified in the protocol. In the two independent assay replicates, the positive control compound, SDS, was positive, and the negative control, PBS, was negative, thereby demonstrating appropriate assay conduct.

The results of the NRR assay were used to calculate the NRR50 values for each CQC salt which were subsequently corrected for the CQC acid equivalent concentrations (NRR50, mg ae/mL). The corrected NRR50 mg ae/mL values were then ordered to facilitate relative comparison of eye irritation potential as defined by the NRR assay (Table 9). CQC salts with the highest NRR50 mg ae/mL values represent those with the lowest eye irritation potential. The NRR assay results when corrected to the acid equivalent basis for each salt indicated a broad range of values ranging from 3 to 213 mg ae/ml. Of the tested salts, CQC-choline possessed the highest NRR50, mg ae/mL value of 213, followed by CQC diethanolamine (NRR50, 92 mg ae/mL), whereas, CQC-ammonium and CQC-acid had the lowest NRR50 mg ae/mL (3 and 9, respectively) which indicates they possess the highest eye irritation potential.

**Table 9. NRR50 (mg ae/mL) Values for the CQC Salts Described Herein**

| CQC Salt | g ae/mL | AE | NRR50 (%v/v) | NRR50, mg ae/mL¹ | Relative Potential Eye Irritancy |
|---|---|---|---|---|---|
| Choline | 0.354 | 0.697 | 60 | 213 | |
| Diethanolamine | 0.484 | 0.693 | 19 | 92 | |
| Isopropanolamine | 0.350 | 0.76 | 15.6 | 55 | |
| Dimethylamine² | 0.102/ 0.463 | 0.841 | 25,11.4, 4.5 | 25.5, 53, 21(ave=33) | |
| Monoethanolamine | 0.299 | 0.794 | 17.1 | 51 | |
| Triisopropanolamine | 0.298 | 0.532 | 6.6, 7.7 | 20, 23 | 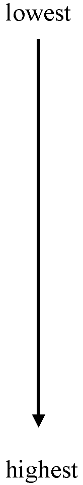 |
| N,N-dimethylethanolamine | 0.290 | 0.727 | 6.8, 6.8 | 20, 20 | |
| Isopropylamine | 0.339 | 0.798 | 5.6 | 19 | |
| Acid (CE) | 0.010 | 1.0 | 88.7 | 9 | |
| Ammonium (CE) | 0.023 | 0.933 | 13.4 | 3 | |

| | | | | | |
|---|---|---|---|---|---|
| ¹NRR50, mg ae/mL = (1000*g ae/mL)×(NRR50/100); ²Two concentrations of CQC-dimethylammonium were tested. | | | | | |

### Example 4

### Evaluation of Eye Irritation Potential of Aqueous Herbicide Suspension Concentrates Containing Cloquintocet Salts

The eye irritation potential of the following CQC salt/aqueous pyroxsulam suspension concentrates (SC) formulations were measured utilizing the NRR assay: CQC-choline, CQC-diethanolammonium, CQC-isopropylammonium, CQC-dimethylammonium, and CQC-triisopropanolammonium. These CQC salts were identified to possess low eye irritation potential in Example 2 and showed high water solubility.

All of the selected test materials (salts and formulations) were tested at the following concentrations: 1.6, 3.1, 6.3, 12.5, 25, 50, 75 and 100% (neat as provided) and the concentration of the test material that resulted in release of 50% (NRR50) of preloaded NR dye compared to negative controls was determined. To enable appropriate interpretation, NRR50 value for each test substance was further corrected to their CQC acid equivalent concentration (NRR50, mg ae/mL).

The NRR assay was performed in a 96-well format, with triplicate wells of each test material concentration for each assay. A total of two independent assay replicates were conducted on separate days. Sodium dodecyl sulfate (SDS; CAS # 151-21-3) at 5 mg/ml was used as the positive control and PBS as negative control. The dispersant Polyfon H and wetting agent Pluronic P-105 were used in the SC compositions at concentrations of 36 and 20 g ai/L, respectively.

The results shown in Table 10 indicate that CQC salt containing herbicide formulations differ in their eye irritation potential as defined by the NRR assay. Specifically, the results indicate that the formulations containing the various CQC-salts exhibited NRR50 mg ae/mL values that ranged from 113-3. The relative order of eye irritation potential for these herbicide formulations closely followed the order of eye irritation potential for the individual CQC salts shown in Table 9.

**Table 10. NRR50 Values for Pyroxsulam/CQC Salt Containing Formulations Described Herein**

| **Formulation Pyroxsulam + CQC Salt** | **Pyroxsulam mg ai/mL** | **CQC mg ae/mL** | **NRR50 (%v/v)** | **NRR50 mg ae/mL¹** |
|---|---|---|---|---|
| CQC-Choline | 90 | 198 | 57 | 113 |
| CQC-diethanolammonium | 93 | 194 | 47 | 91 |
| CQC-isopropanolammonium | 89 | 192 | 29 | 56 |
| CQC-dimethylammonium | 92 | 191 | 22 | 41 |
| CQC-TIPA Trial 1² | 30 | 63 | >100 | >63 |
| CQC-TIPA Trial 2 | 30 | 63 | 61 | 39 |
| CQC- monoethanolammonium | 31 | 62 | 79 | 49 |
| CQC-dimethylethanolammonium | 31 | 62 | 18 | 11 |
| CQC-isopropylammonium | 31 | 62 | 29.5 | 18 |
| CQC-ammonium (CE) | 31 | 63 | 5 | 3 |

| | | | | |
|---|---|---|---|---|
| ¹NRR50, mg ae/mL CQC-salt = (CQC mg ae/mL)×(NRR50/100); ² In Trial 1, the 100% test sample afforded only a 48.5% NRR value. | | | | |

### Example 5

### Herbicide Biology - Greenhouse Evaluation of the Described Compositions

### Plant Propagation

A peat based potting soil, Metro-mix 360, (produced by Sun Gro Horticulture Canada CM Ltd) was used as the soil media for this test. Metro-mix 360 is a growing medium consisting of Canadian sphagnum peat moss, coarse perlite, bark ash, starter nutrient charge (with gypsum) and slow release nitrogen and dolomitic limestone. Several seeds of each crop or weed species were planted in 10 cm square pots and top watered twice daily. Plant material was propagated in greenhouse zone E2 at temperatures ranging from 18 to 20°C and 50 to 60% relative humidity. Natural light was supplemented with 1000-watt metal halide overhead lamps with an average illumination of 500 microeinsteins per square meter per second (µE m⁻² s⁻¹) photosynthetic active radiation (PAR). Day length was 16 hours. Plant material was top-watered prior to treatment and sub-irrigated after treatment.

### Herbicide Application

Herbicides were applied with a track sprayer manufactured by Allen Machine Works and located in building 306, room E1-483, at the Dow AgroSciences Indianapolis, Indiana Global Headquarters site (9330 Zionsville Road, Indianapolis, Indiana, USA). The track sprayer was calibrated to deliver 50 L/ha at 40 psi (262 kPa) pressure utilizing an 8001E even flat fan nozzle tip with a speed of 1.6 mph (2.6 km/h). The nozzle height was 46 cm above the plant canopy. Appropriate amounts of formulated product were added to vials as calculated by the software package ARM8 (Gylling Data Management Inc.). The vials contained a pH 7 phosphate buffer (Fischer Scientific) and the herbicide aliquots were diluted to a total volume of 60 ml. The growth stage of the crop and weed species at application was 2 to 4 leaf (Table 11). The application rates were 0, 17.8 and 37.6 g ai/ha of pyroxsulam for crop tolerance comparisons and 0, 2.35 and 4.7 g ai/ha of pyroxsulam for weed control comparisons. Cloquintocet was applied at a 1:2.1 ratio of pyroxsulam (g ai) : cloquintocet (g ae) in all treatments containing the safener. Treatments were replicated 4 times. Plants were returned to the greenhouse after treatment and sub-watered throughout the duration of the experiment. Plant material was fertilized twice weekly with Hoagland's fertilizer solution that is readily available in the greenhouses. Percent visual injury assessments were made on a scale of 0 to 100% as compared to the untreated control plants (where 0 is equal to no injury and 100 is equal to complete death of the plant.

**Table 11. Growth stage of plant species tested**

| **Common Name** | **Scientific Name** | **EPPO Code** | **Growth Stage at Application** |
|---|---|---|---|
| Spring wheat | *Triticum aestivum* | TRZAS | 3 to 4 leaves |
| Durum wheat | *Triticum durum* | TRZDU | 3 to 4 leaves |
| Wild Oats | *Avena fatua* | AVEFA | 2 to 3 leaves |

### Evaluation of Cloquintocet Salts to Safen Pyroxsulam on Crops

Pyroxsulam was tested with various cloquintocet salts for their ability to reduce injury to grass crops. Visual determination of injury on spring wheat (*Triticum aestivum L.,* **TRZAS**) and durum wheat (*Triticum durum L.* **TRZDU**) from spray treatments with pyroxsulam alone and with several forms of cloquintocet was conducted. All forms of cloquintocet were applied at a 1:2.1 weight ratio of pyroxsulam:cloquintocet (AE). Results are shown in Table 12.

**Table 12. Ability of Cloquintocet Salts to Safen Pyroxsulam to Spring and Durum Wheat**

| **Pyroxsulam Rate (g ai/ha)** | **Cloquintocet form** | **TRZAS Injury 22 DAA (% Injury)** | **TRZDU Injury 22 DAA (% Injury)** |
|---|---|---|---|
| 18.8 | No safener (CE) | 70 | 82 |
| 37.6 | No safener (CE) | 76 | 88 |
| 18.8 | mexyl (CE) | 3 | 19 |
| 37.6 | mexyl (CE) | 15 | 34 |
| 18.8 | acid (CE) | 0 | 4 |
| 37.6 | acid (CE) | 25 | 26 |
| 18.8 | choline | 6 | 9 |
| 37.6 | choline | 21 | 12 |
| 18.8 | diethanolamine | 18 | 12 |
| 37.6 | diethanolamine | 21 | 18 |
| 18.8 | isopropanolamine | 2 | 9 |
| 37.6 | isopropanolamine | 20 | 12 |
| 18.8 | dimethylamine | 11 | 9 |
| 37.6 | dimethylamine | 11 | 15 |
| 18.8 | monoethanolamine | 1 | 10 |
| 37.6 | monoethanolamine | 14 | 19 |
| 18.8 | triisopropanolamine | 4 | 11 |
| 37.6 | triisopropanolamine | 9 | 24 |
| 18.8 | isopropylamine | 2 | 8 |
| 37.6 | isopropylamine | 20 | 14 |

### Evaluation of Various Pyroxsulam + Cloquintocet Salt Treatments to Control Weeds

Visual determination of the control of wild oats (*Avena fatua L.,* **AVEFA**) treated with pyroxsulam alone and with several forms of cloquintocet was conducted. All forms of cloquintocet were applied at a 1:2.1 weight ratio of pyroxsulam: cloquintocet (AE). Results are shown in Table 13.

**Table 13. Ability of Cloquintocet/Pyroxsulam Compositions to Control Wild Oats**

| **Pyroxsulam Rate (g ai/ha)** | **Cloquintocet form** | **AVEFA Control 21 DAA (% Control)** |
|---|---|---|
| 2.35 | No safener (CE) | 86 |
| 4.7 | No safener (CE) | 98 |
| 2.35 | mexyl (CE) | 71 |
| 4.7 | mexyl (CE) | 84 |
| 2.35 | acid (CE) | 96 |
| 4.7 | acid (CE) | 99 |
| 2.35 | choline | 94 |
| 4.7 | choline | 99 |
| 2.35 | diethanolamine | 88 |
| 4.7 | diethanolamine | 94 |
| 2.35 | isopropanolamine | 80 |
| 4.7 | isopropanolamine | 90 |
| 2.35 | dimethylamine | 88 |
| 4.7 | dimethylamine | 90 |
| 2.35 | monoethanolamine | 91 |
| 4.7 | monoethanolamine | 99 |
| 2.35 | triisopropanolamine | 97 |
| 4.7 | triisopropanolamine | 96 |
| 2.35 | isopropylamine | 90 |
| 4.7 | isopropylamine | 99 |

## Claims

1. A herbicidal composition comprising a herbicidally effective amount of
(a) pyroxsulam or an agriculturally acceptable salt thereof and
(b) a cloquintocet salt, wherein the cloquintocet salt comprises a cation selected from the group consisting of monoethanolammonium, diethanolammonium, triethanolammonium, monoisopropanolammonium, diisopropanolammonium, triisopropanolammonium, choline, N,N-dimethylethanolammonium, dimethylammonium, isopropylammonium, or mixtures thereof,
wherein the herbicidal composition is
an aqueous suspension concentrate, or an aqueous suspension emulsion concentrate, containing with respect to the total composition, (a) from 5 grams active ingredient per liter (g ai/L) to 150 g ai/L of pyroxsulam, or an agriculturally acceptable salt thereof and (b) from 10 grams acid equivalent per liter (g ae/L) to 250 g ae/L of the cloquintocet salt; or
an aqueous spray mixture or solution comprising (a) 0.001 to 2.0 wt.-% pyroxsulam and (b) 0.005 to 2.0 wt.-% ae of the cloquintocet salt.

2. The composition of claim 1, wherein the cloquintocet salt comprises a cation selected from the group consisting of monoethanolammonium, diethanolammonium, monoisopropanolammonium, choline, dimethylammonium, triisopropanolammonium, or mixtures thereof; preferably wherein the cloquintocet salt comprises a cation selected from the group consisting of monoethanolammonium, choline, dimethylammonium, triisopropanolammonium, or mixtures thereof.

3. The composition of any one of claims 1-2, wherein the composition is an aqueous suspension concentrate or an aqueous suspension emulsion concentrate.

4. The composition of any one of claims 1-3, wherein the weight ratio of (a) in g ai/ha to (b) in g ae/ha is from about 1:4 to about 1:0.5.

5. The composition of any one of claims 1-4, wherein the composition comprises from 20-100 g ai/L of pyroxsulam or an agriculturally acceptable salt thereof or from 60-200 g ae/L of the cloquintocet salt.

6. The composition of any one of claims 1-5, further comprising an additional pesticide.

7. The composition of claim 6, wherein the additional pesticide is selected from the group including aminopyralid, clopyralid, florasulam, fluroxypyr-meptyl, halauxifen-methyl, penoxsulam, and the compound of formula 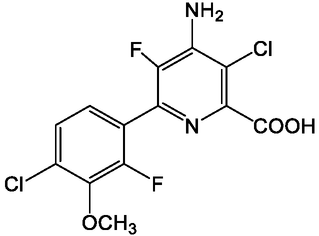 or a C₁-C₁₂ alkyl or C₇-C₁₂ arylalkyl ester or salt thereof.

8. The composition of claim 6, wherein the additional pesticide is selected from the group consisting of cloransulam-methyl, diclosulam, flumetsulam, isoxaben, metosulam, 2,4-D, MCPA, picloram, propyzamide, triclopyr, tebuthiuron, thiazopyr, and trifluralin.

9. A method of controlling undesirable vegetation which comprises contacting the vegetation or the locus thereof with or applying to the soil or water to prevent the emergence or growth of vegetation the composition of any one of claims 1-8.

10. The method of claim 9, wherein the composition is applied postemergence to the undesirable vegetation.

11. The method of claim 9 or 10, wherein the undesirable vegetation is controlled in wheat, barley, triticale, teff, oats, sorghum, corn, rice, sugarcane, or pasture grasses; preferably wherein the undesirable vegetation is controlled in wheat.

12. The method of claim 11, wherein the undesirable vegetation is controlled in oats.

13. The method of any one of claims 9-12, wherein the undesirable vegetation is selected from the group consisting of wild oat, annual ryegrass, and combinations thereof.

14. The method of any one of claims 9-13, wherein (a) is applied in an amount of from 4-40 g ai/ha.

15. The method of any one of claims 9-14, wherein (b) is applied in an amount of from 10-80 g ae/ha.

## Patentansprüche

1. Herbizide Zusammensetzung, umfassend eine herbizid wirksame Menge von
(a) Pyroxsulam oder einem landwirtschaftlich unbedenklichen Salz davon und
(b) einem Cloquintocet-Salz, wobei das Cloquintocet-Salz ein Kation umfasst, das aus der Gruppe bestehend aus Monoethanolammonium, Diethanolammonium, Triethanolammonium, Monoisopropanolammonium, Diisopropanolammonium, Triisopropanolammonium, Cholin, N,N-Dimethylethanolammonium, Dimethylammonium, Isopropylammonium oder Mischungen davon ausgewählt ist, wobei es sich bei der herbiziden Zusammensetzung um Folgendes handelt:
ein wässriges Suspensionskonzentrat oder ein wässriges Suspensionsemulsionskonzentrat, enthaltend, bezogen auf die gesamte Zusammensetzung, (a) 5 Gramm Wirkstoff pro Liter (g ai/l) bis 150 g ai/l Pyroxsulam oder eines landwirtschaftlich unbedenklichen Salzes davon und (b) 10 Gramm Säureäquivalent pro Liter (g ae/l) bis 250 g ae/l des Cloquintocet-Salzes; oder
eine wässrige Spritzbrühe oder -lösung, umfassend (a) 0,001 bis 2,0 Gew.-% Pyroxsulam und (b) 0,005 bis 2,0 Gew.-% ae des Cloquintocet-Salzes.

2. Zusammensetzung nach Anspruch 1, wobei das Cloquintocet-Salz ein Kation umfasst, das aus der Gruppe bestehend aus Monoethanolammonium, Diethanolammonium, Monoisopropanolammonium, Cholin, Dimethylammonium, Triisopropanolammonium oder Mischungen davon ausgewählt ist; vorzugsweise wobei das Cloquintocet-Salz ein Kation umfasst, das aus der Gruppe bestehend aus Monoethanolammonium, Cholin, Dimethylammonium, Triisopropanolammonium oder Mischungen davon ausgewählt ist.

3. Zusammensetzung nach einem der Ansprüche 1-2, wobei es sich bei der Zusammensetzung um ein wässriges Suspensionskonzentrat oder ein wässriges Suspensionsemulsionskonzentrat handelt.

4. Zusammensetzung nach einem der Ansprüche 1-3, wobei das Gewichtsverhältnis von (a) in g ai/ha zu (b) in g ae/ha etwa 1:4 bis etwa 1:0,5 beträgt.

5. Zusammensetzung nach einem der Ansprüche 1-4, wobei die Zusammensetzung 20-100 g ai/l Pyroxsulam oder eines landwirtschaftlich unbedenklichen Salzes davon oder 60-200 g ae/l des Cloquintocet-Salzes umfasst.

6. Zusammensetzung nach einem der Ansprüche 1-5, ferner umfassend ein zusätzliches Pestizid.

7. Zusammensetzung nach Anspruch 6, wobei das zusätzliche Pestizid aus der Gruppe enthaltend Aminopyralid, Clopyralid, Florasulam, Fluroxypyr-Meptyl, Halauxifen-Methyl, Penoxsulam und die Verbindung der Formel 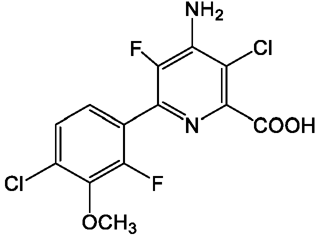 oder einen C₁-C₁₂-Alkyl- oder C₇-C₁₂-Arylalkylester oder ein Salz davon ausgewählt ist.

8. Zusammensetzung nach Anspruch 6, wobei das zusätzliche Pestizid aus der Gruppe bestehend aus Cloransulam-Methyl, Diclosulam, Flumetsulam, Isoxaben, Metosulam, 2,4-D, MCPA, Picloram, Propyzamid, Triclopyr, Tebuthiuron, Thiazopyr und Trifluralin ausgewählt ist.

9. Verfahren zur Bekämpfung unerwünschter Vegetation, umfassend das Inkontaktbringen der Vegetation oder ihres Orts mit der Zusammensetzung nach einem der Ansprüche 1-8 oder das Aufbringen der Zusammensetzung nach einem der Ansprüche 1-8 auf den Erdboden oder Wasser zur Verhinderung des Auflaufens oder Wachstums von Vegetation.

10. Verfahren nach Anspruch 9, wobei die Zusammensetzung nach dem Auflaufen auf die unerwünschte Vegetation ausgebracht wird.

11. Verfahren nach Anspruch 9 oder 10, wobei die unerwünschte Vegetation in Weizen, Gerste, Triticale, Teff, Hafer, Sorghum, Mais, Reis, Zuckerrohr oder Weidegräsern bekämpft wird; vorzugsweise die unerwünschte Vegetation in Weizen bekämpft wird.

12. Verfahren nach Anspruch 11, wobei die unerwünschte Vegetation in Hafer bekämpft wird.

13. Verfahren nach einem der Ansprüche 9-12, wobei die unerwünschte Vegetation aus der Gruppe bestehend aus Flughafer, Italienischem Raygras und Kombinationen davon ausgewählt wird.

14. Verfahren nach einem der Ansprüche 9-13, wobei (a) in einer Menge von 4-40 g ai/ha ausgebracht wird.

15. Verfahren nach einem der Ansprüche 9-14, wobei (b) in einer Menge von 10-80 g ae/ha ausgebracht wird.

## Revendications

1. Composition herbicide comprenant une quantité efficace du point de vue herbicide de
(a) pyroxsulame ou un sel acceptable sur le plan agricole de celui-ci et
(b) un sel de cloquintocet, dans lequel le sel de cloquintocet comprend un cation choisi dans le groupe constitué de monoéthanolammonium, diéthanolammonium, triéthanolammonium, monoisopropanolammonium, diisopropanolammonium, triisopropanolammonium, choline, N,N-diméthyléthanolammonium, diméthylammonium, isopropylammonium ou leurs mélanges,
dans laquelle la composition herbicide est un concentré de suspension aqueuse ou un concentré d'émulsion en suspension aqueuse contenant, par rapport à la composition totale, (a) de 5 grammes d'ingrédient actif par litre (g ia/L) à 150 g ia/L de pyroxsulame, ou d'un sel acceptable sur le plan agricole de celui-ci et (b) de 10 grammes d'équivalent acide par litre (g éa/L) à 250 g éa/L de sel de cloquintocet ; ou
un mélange aqueux ou une solution aqueuse de pulvérisation comprenant (a) 0,001 à 2,0 % en poids de pyroxsulame et (b) 0,005 à 2,0 % en poids de sel de cloquintocet.

2. Composition selon la revendication 1, dans laquelle le sel de cloquintocet comprend un cation choisi dans le groupe constitué de monoéthanolammonium, diéthanolammonium, monoisopropanolammonium, choline, diméthylammonium, triisopropanolammonium ou leurs mélanges ; de préférence, le sel de cloquintocet comprend un cation choisi dans le groupe constitué de monoéthanolammonium, choline, diméthylammonium, triisopropanolammonium ou leurs mélanges.

3. Composition selon l'une quelconque des revendications 1 et 2, dans laquelle la composition est un concentré de suspension aqueuse ou un concentré d'émulsion en suspension aqueuse.

4. Composition selon l'une quelconque des revendications 1 à 3, dans laquelle le rapport pondéral de (a) en g ai/ha sur (b) en g éa/ha est d'environ 1:4 à environ 1:0,5.

5. Composition selon l'une quelconque des revendications 1 à 4, dans laquelle la composition comprend de 20 à 100 g ia/L de pyroxsulame ou d'un sel acceptable sur le plan agricole de celui-ci ou de 60 à 200 g éa/L du sel de cloquintocet.

6. Composition selon l'une quelconque des revendications 1 à 5, comprenant en outre un pesticide supplémentaire.

7. Composition selon la revendication 6, dans laquelle le pesticide supplémentaire est choisi dans le groupe comprenant aminopyralide, clopyralide, florasulame, fluroxypyr-meptyl, halauxifène-méthyle, pénoxsulame et le composé de formule 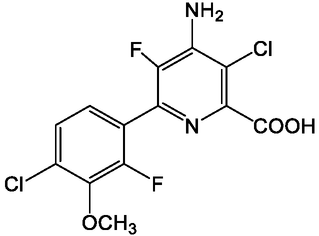 ou un ester de C₁-C₁₂ alkyle ou C₇-C₁₂ arylalkyle ou un sel de celui-ci.

8. Composition selon la revendication 6, dans laquelle le pesticide supplémentaire est choisi dans le groupe constitué du cloransulam-méthyle, diclosulam, flumetsulame, isoxaben, métosulame, 2,4-D, MCPA, piclorame, propyzamide, triclopyr, tébuthiuron, thiazopyr et trifluraline.

9. Procédé de lutte contre la végétation indésirable, qui comprend la mise en contact de la végétation ou de son emplacement avec, ou l'application sur le sol ou l'eau pour empêcher l'émergence ou la croissance de végétation de la composition selon l'une quelconque des revendications 1 à 8.

10. Procédé selon la revendication 9, dans lequel la composition est appliquée en post-émergence sur la végétation indésirable.

11. Procédé selon la revendication 9 ou 10, dans lequel la végétation indésirable est combattue dans le blé, l'orge, le triticale, le teff, l'avoine, le sorgho, le maïs, le riz, la canne à sucre ou les graminées de pâturage ; de préférence, la végétation indésirable étant combattue dans le blé.

12. Procédé selon la revendication 11, dans lequel la végétation indésirable est combattue dans l'avoine.

13. Procédé selon l'une quelconque des revendications 9 à 12, dans lequel la végétation indésirable est choisie dans le groupe constitué de l'avoine sauvage, le ray-grass annuel et les combinaisons de ceux-ci.

14. Procédé selon l'une quelconque des revendications 9 à 13, dans lequel (a) est appliqué en une quantité de 4 à 40 g ia/ha.

15. Procédé selon l'une quelconque des revendications 9 à 14, dans lequel (b) est appliqué en une quantité de 10 à 80 g éa/ha.
